# FASCICULE DE BREVET EUROPEEN

(11) **EP 1 957 275 B1**
(45) Date de publication et mention de la délivrance du brevet: **22.10.2014**
(21) Numéro de dépôt: 06841873.0
(22) Date de dépôt: 06.12.2006
(51) Int. Cl.: B41F 17/00, B41K 3/14

(54) **PROCEDE DE TRANSFERT D'UN MOTIF MICRONIQUE SUR UN ARTICLE OPTIQUE ET ARTICLE OPTIQUE AINSI OBTENU**
VERFAHREN ZUR ÜBERTRAGUNG EINER MIKRONENSTRUKTUR AUF EINE OPTISCHE STRUKTUR UND DADURCH GEWONNENE OPTISCHE STRUKTUR
METHOD FOR TRANSFERRING A MICRON PATTERN ON AN OPTICAL PATTERN AND THE THUS OBTAINED OPTICAL PATTERN

(30) Priorité: 08.12.2005 FR 0512485
(43) Date de publication de la demande: 20.08.2008
(73) Titulaire: ESSILOR INTERNATIONAL (Compagnie Générale d'Optique), F-94220 Charenton-le-Pont (FR)
(72) Inventeur: BEGON, Cédric, F-94220 Charenton Le Pont (FR); DEFRANCO, Christelle, F-94220 Charenton Le Pont (FR)
(74) Mandataire: Cabinet Plasseraud
(86) Numéro de dépôt international: PCT/FR2006/002666
(87) Numéro de publication internationale: WO 2007/066007

(56) Documents cités:
- WO-A-99/55790
- DE-A1- 10 060 531
- FR-A- 2 507 196
- US-A- 5 937 758
- US-A1- 2004 115 279

## Description

La présente invention concerne un procédé de transfert d'un motif de taille micronique sur un article optique, ainsi qu'un article optique comprenant un tel motif en utilisant ce procédé. Elle est particulièrement adaptée à un produit du type lentille optique, notamment du type lentille ophtalmique. Ce procédé est très avantageux pour introduire un motif holographique, et plus particulièrement un hologramme d'amplitude sur un tel article optique.

Il peut être nécessaire d'imprimer un motif micronique déterminé sur un produit fini ou en cours de fabrication, notamment dans un but de décoration, pour indiquer une marque du produit ou pour empêcher d'éventuelles contrefaçons du produit, par exemple.

Pour cela, plusieurs procédés d'impression ont été développés, qui sont désignés globalement par procédés de lithographie douce (pour «soft-lithography» en anglais), par opposition aux procédés lithographiques utilisés classiquement pour la fabrication de circuits électroniques intégrés. Alors que ces derniers sont basés sur l'irradiation et la dissolution sélectives de portions d'un masque de résine selon un motif déterminé, les procédés de lithographie douce utilisent un tampon dont la surface présente un microrelief constitué de creux et de protubérances. Ce microrelief définit le motif à reproduire sur le produit. Le motif est reproduit sur une face du produit par application du tampon, dans des conditions qui sont adaptées en fonction du matériau présent à la surface du produit. On désigne par motif l'arrangement géométrique des portions de surface des protubérances qui sont au contact de la surface du produit lorsque le tampon est appliqué.

Dans le procédé de lithographie douce appelé impression par micro-contact («micro-contact printing» en anglais), la face du produit est recouverte d'une couche métallique et le tampon est enduit d'une substance capable de protéger la couche métallique pendant une étape de gravure. Lors de l'application du tampon sur la face du produit, une partie de la substance est sélectivement transférée du tampon sur la couche métallique à des endroits qui correspondent aux protubérances du tampon. La couche métallique n'est ensuite gravée qu'aux endroits de celle-ci qui correspondent aux creux du tampon. Or il est nécessaire d'utiliser une substance qui forme une couche moléculaire auto-assemblée sur la couche métallique pour obtenir une qualité d'impression satisfaisante. Pour cela, la couche métallique doit être dépourvue de pollutions et être constituée d'un métal peu sujet à une éventuelle altération chimique de surface, telle qu'une oxydation. Dans la pratique, seuls l'or, le platine est l'argent permettent d'obtenir une qualité d'impression satisfaisante. Un tel choix du matériau qui constitue le motif imprimé est particulièrement réduit, et peut être incompatible avec d'autres contraintes du produit, telles que son prix de revient. En outre, un tel procédé est long à mettre en oeuvre, notamment à cause de l'étape de gravure de la couche métallique qui est généralement réalisée en utilisant une solution liquide d'un agent de gravure.

Le document JP07-219435 décrit un procédé de fabrication d'un joint à hologramme, suivant lequel un hologramme constitué de creux et de protubérances est d'abord gravé à la surface d'un matériau thermoplastique, puis recouvert par une couche métallique. Or dans un tel procédé, il est difficile de limiter la couche métallique à la portion de la surface qui est occupée par l'hologramme.

Les documents US-A-5 937 758, US 2004/115279 A1, DE 100 60531 A1, WO 99/55790 et FR-A-2507196 font partie aussi de l'état de l'art.

Un but de la présente invention est de proposer un procédé de transfert selon un motif déterminé d'un matériau constitué en couche mince ou d'un empilement de matériaux constitués en couches minces, procédé simple à mettre en oeuvre et compatible avec un grand nombre de matériaux. La présente invention doit notamment permettre le transfert sélectif d'un matériau sur un article optique selon un motif présentant une définition à l'échelle micronique, voire sub-micronique, un tel motif constituant avantageusement un hologramme. On entend par transfert sélectif un transfert qui géométriquement ne concerne que le matériau porté par les protubérances du tampon.

D'une façon générale au sens de l'invention, l'emploi du terme micronique englobe à la fois un motif micronique présentant une définition à l'échelle de la taille du micron, et un motif submicronique présentant une définition à l'échelle inférieure à la taille du micron soit à l'échelle de la centaine voire cinquantaine de nanomètres.

Pour cela, l'invention propose un procédé de transfert d'un motif micronique, tel que défini précédemment, sur une surface d'un article optique qui comprend les étapes suivantes :
/a/ déposer une couche d'au moins un matériau transférable sur une surface d'un tampon comportant des creux et des protubérances, constituant le microrelief à définition micronique ou sub-micronique, correspondant au motif à transférer ;
/b/ déposer une couche d'un adhésif sensible à la pression (matériau dénommé par l'acronyme anglais « PSA » pour « Pressure Sensitive Adhésive ») sur la surface du substrat de l'article optique;
/c/ mettre en contact la surface du tampon qui comprend la couche de matériau transférable avec la couche d'adhésif sensible à la pression;
/d/ appliquer une pression sur le tampon; et
/e/ écarter le tampon de la surface de l'article optique comprenant la couche d'adhésif sensible à la pression.

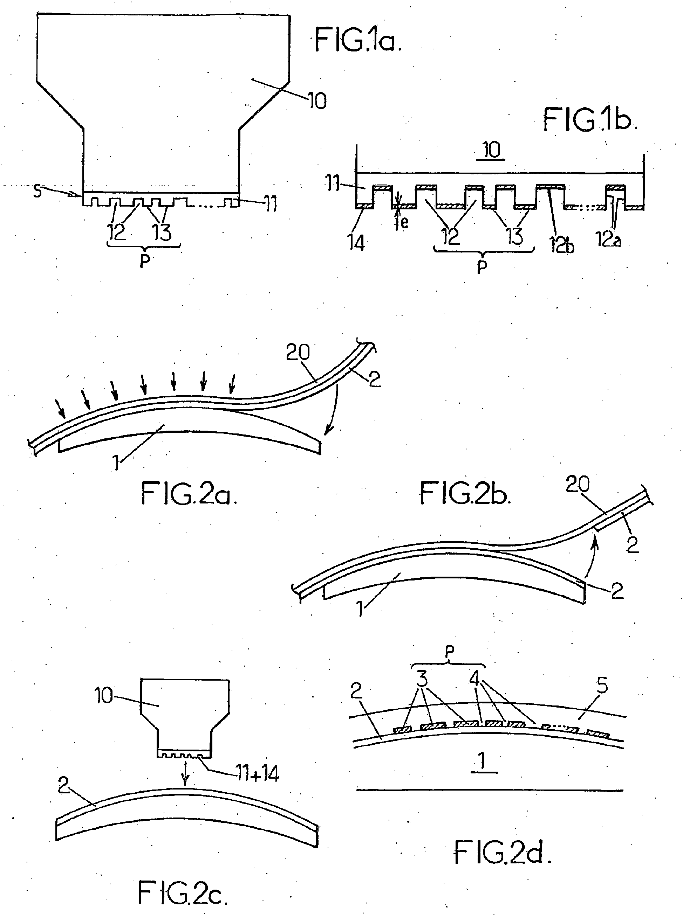

Selon l'invention la couche de matériau transférable déposée sur le microrelief du tampon lors de l'étape /a/ n'épouse généralement pas de façon conforme le microrelief. La couche est présente préférentiellement sur les zones du microrelief qui s'apparentent à des plans orthogonaux à la direction principale dans laquelle s'est effectué le dépôt de matière. Ces zones sont portées par les protubérances (13) ou les creux du tampon (12b), comme indiqué dans la figure 1 b.

Dans le cadre du procédé, on entend par article optique, un article choisi parmi une lentille optique d'instrumentation, une lentille de visée, une visière et une lentille ophtalmique.

Selon l'invention, d'une façon avantageuse le procédé de transfert d'un motif micronique sur une surface d'un article optique est un procédé de transfert sélectif. Un tel transfert sélectif permet notamment la réalisation d'un hologramme d'amplitude avec une excellente résolution.

Ainsi, la surface du tampon est appliquée sur la surface de l'article optique revêtu d'une couche d'adhésif sensible à la pression (PSA) dans des conditions adaptées de sorte que la couche de matériau transférable située sur les protubérances de la surface du tampon est sélectivement transférée sur la surface de PSA déposée sur l'article optique ayant été mise en contact avec ledit tampon.

Un procédé selon l'invention est donc du type lithographie douce et présente de ce fait des avantages spécifiques. En particulier, le procédé ne comprend aucune étape de gravure car les portions de la couche de matériau transférable qui sont initialement situées dans les creux de la surface du tampon ne sont pas mises en contact avec la couche de matériau adhésif, et de ce fait ne sont pas transférées à la surface du PSA. Ce procédé est précis, et présente l'avantage d'être non polluant, aucune étape de gravure chimique étant nécessaire.

L'utilisation d'un PSA dans ce type de procédé est particulièrement avantageuse. En effet tous les PSA ont en commun de présenter une propriété adhésive permanente (dénommée « tack » ou « tackiness » en anglais) et un module élastique faible à température ambiante, typiquement compris entre 10³ et 10⁷ Pa (Pascals). Il est remarquable que le mécanisme d'adhésion mis en jeu avec un tel matériau adhésif ne fait pas intervenir de liaison chimique mais exploite les propriétés viscoélastiques particulières du matériau PSA. Ces propriétés intrinsèques à chaque formulation de PSA permettent notamment d'établir à l'interface de collage des interactions électrostatiques de Van der Waals. C'est ce qui se produit lorsque le PSA est mis au contact d'un matériau solide avec une pression - la pression appliquée et le faible module du matériau PSA permettant de garantir un contact intime du PSA à l'échelle moléculaire avec la topologie du matériau à coller. D'autre part, les propriétés viscoélastiques volumiques du PSA permettent de dissiper dans l'épaisseur de la couche adhésive l'énergie amenée par des sollicitations mécaniques de l'interface de collage, et donc de résister aux mécanismes de décollement.

Dans le procédé selon la présente invention, la propriété adhésive permanente du PSA à la surface de l'article optique permet de choisir le moment où cette fonction est utilisée pour assurer le transfert du matériau transférable et son adhésion permanente et cohérente avec l'article optique. Une gestion de la chaîne de production est alors envisageable du fait de cette propriété permanente d'adhésion que possèdent les PSA, mais dont l'ensemble des propriétés n'est mis en oeuvre qu'après l'exercice d'une pression entre le PSA et le matériau à transférer.

Dans le procédé selon l'invention, une couche de matériau adhésif sensible à la pression assure l'adhésion, sur la surface de l'article optique, des portions de la couche de matériau transférable qui sont transférées pendant l'application du tampon. Un tel mécanisme d'adhésion est compatible avec un grand nombre de matériaux transférables, notamment des matériaux conducteurs électriquement, des matériaux métalliques, isolants, diélectriques, ou réfringents.

Un avantage de l'invention réside dans les conditions de mise en contact du tampon revêtu d'au moins une couche de matériau transférable sur la surface de l'article optique revêtu d'au moins une couche d'adhésif sensible à la pression. Ces conditions sont sélectionnées de sorte que seules les portions de la couche de matériau transférable qui sont situées sur les protubérances du tampon sont transférées sur la couche de PSA, au niveau de, laquelle le contact est établit. En particulier, grâce à l'utilisation d'un matériau adhésif sensible à la pression, la pression d'application du tampon sur le l'article optique peut être choisie à l'intérieur d'un intervalle étendu de valeurs. Parmi les conditions de mise en contact du tampon avec la surface de l'article optique, d'une façon avantageuse, le procédé selon l'invention est réalisée dans des conditions telles que le tampon présente une approche parallèle à la normale du point de contact sur le substrat de l'article optique.

Comme mentionné précédemment, le motif peut être micronique ou submicronique, le terme micronique étant utilisé d'une façon générale dans l'ensemble de la description pour désigner ces deux tailles de motifs. Ainsi d'une façon générale au sens de l'invention, on entend par motif micronique un motif comprenant un ou plusieurs motifs élémentaires chaque motif élémentaire présentant une taille comprise entre 10 µm (micromètre) et 50 nm (nanomètre), avantageusement entre 5 µm et 100 nm, et très avantageusement entre 3 µm et 150 nm.

Le motif transféré peut être, en particulier, un motif diffractant lorsqu'il est éclairé par un faisceau lumineux. Ce peut être notamment un motif holographique. Un tel motif est particulièrement adapté pour permettre d'identifier un produit et/ou de distinguer un produit original d'une copie de contrefaçon. Plus particulièrement, le procédé selon l'invention est particulièrement adapté pour introduire un hologramme d'amplitude sur l'article optique. On désigne par hologramme d'amplitude une microstructure holographique qui affecte préférentiellement l'amplitude du champ électromagnétique en incidence normale. C'est le cas en particulier d'un hologramme composé d'un arrangement de zones transparentes et de zones opaques, qui sont également réfléchissantes dans le cas ou l'opacité est obtenue par un métal. Une image de lecture correspondant à l'hologramme peut alors être visualisée par transmission ou par réflexion d'un faisceau lumineux sur la lentille

Le motif peut aussi représenter un logo ou une inscription directement lisible sur le produit. Lorsque le motif est constitué d'une pluralité de motifs élémentaires et identiques, il peut être à la fois du type holographique et posséder une signification directement lisible sur le produit.

Le motif holographique peut également être de type hologramme numérique, c'est-à-dire un hologramme généré par ordinateur (souvent dénommé par l'acronyme anglais « CGH » pour « Computer Generated Hologram »). Dans un tel cas, le motif holographique peut être constitué d'un ensemble de pixels contigus, chaque pixel ayant une surface comprise entre 0,2 µm² et 25 µm², avantageusement entre 0,2 µm² et 4 µm². Préférentiellement, le motif comprendra un grand nombre de pixels, par exemple un nombre total supérieur à 10 000 pixels, permettant ainsi d'obtenir par reconstruction sous illumination une image présentant une résolution suffisante..

Le motif transféré peut occuper une partie réduite d'une face du produit, notamment pour ne pas masquer le produit lui-même ou pour ne pas gêner une utilisation ultérieure du produit. Dans une telle configuration, il peut être avantageux de déposer une couche d'adhésif sensible à la pression sur une surface du substrat sensiblement égale à la surface du motif. Dans une telle configuration le motif occupera de façon préférentielle une partie de la face de l'article optique inférieure à 25 mm².

Alternativement, le motif transféré peut occuper toute une face de l'article optique, notamment lorsqu'il comprend un réseau de fils microniques ou submicroniques. Un tel motif occupant toute une face de l'article peut être réalisé pour obtenir une fonction antistatique à la surface de l'article optique, pour réaliser un ensemble d'électrodes d'une matrice d'affichage ou encore une fonction de filtrage en polarisation d'une lumière réfléchie ou transmise par l'article optique. Dans ce dernier cas, l'effet polarisant est obtenu en transférant un motif de fils conducteurs parallèles (réseau de type polariseur à fil ou « wire-grid » selon la dénomination anglaise).

Avantageusement, un traitement de la surface de l'article optique peut être effectué avant de disposer la couche de matériau adhésif sur la surface dudit article optique. Ce traitement est notamment choisi parmi un traitement chimique, thermique, plasma ou corona. Ce traitement de la surface peut notamment comprendre un traitement chimique consistant en un nettoyage avec de l'isopropanol et/ou de l'eau de la surface de l'article optique. Ainsi, des poussières ou salissures éventuellement présentes sur cette surface peuvent être retirées.

La couche adhésive peut dans le cadre de l'invention être déposée par un procédé de centrifugation (spin coating), procédé bien intégré notamment dans les chaînes de production de lentilles ophtalmiques. Elle peut également être déposée par d'autres techniques de dépôt telles que le spray, ou le jet de matière par les buses d'une tête d'impression jet d'encre.

La couche de matériau adhésif sensible à la pression peut également être préparée initialement sous la forme d'un film d'épaisseur contrôlée supporté par au moins une feuille de protection, et préférentiellement une feuille de protection sur chaque face du film. La couche adhésive peut ainsi être appliquée sur la surface de l'article sous forme de film après enlèvement d'une feuille de protection. Après cette application, la seconde feuille de protection peut ensuite être pelée de façon à laisser apparaître la couche de matériau adhésif sur la surface de l'article. Cette feuille de protection est communément appelée "liner".

Selon l'invention, la couche de matériau adhésif sensible à la pression présente une épaisseur constante sur la surface de la lentille optique. Cette équiépaisseur permet de garantir la qualité optique du produit final. Cette épaisseur est comprise entre 0,5 µm et 300 µm, avantageusement entre 5 µm et 100 µm, et très préférentiellement entre 10 µm et 50 µm notamment dans le cas où l'article optique est une lentille ophtalmique. La couche doit être optiquement transparente. Son taux de transmission peut être variable, notamment en cas de couche teintée, mais elle ne doit ni diffuser, ni diffracter, ni modifier la perception d'un objet observé par transparence au travers de l'article optique comprenant une telle couche de matériau adhésif.

Le procédé peut comprendre en outre l'étape suivante, qui est réalisée après l'étape /a/ et/ou l'étape/e/:
/f/ recouvrir la surface de l'article par un ou plusieurs revêtements fonctionnalisés.

Ces revêtements fonctionnalisés peuvent être déposés sous forme de film ou de vernis monocouches ou multicouches, par tout moyen de dépôt tel que par exemple le trempage, la centrifugation, le spray, ou le jet de matière par les buses d'une tête d'impression jet d'encre. Ils sont avantageusement choisis parmi les revêtements présentant une fonctionnalité de type anti-choc, anti-abrasion, antireflet, antisalissure, antibuée, antistatique, polarisante, colorante et photochromique.

Selon un mode préférentiel de l'invention, le procédé comprend ainsi une étape supplémentaire qui est réalisée après l'étape /e/ et qui consiste à recouvrir la surface de l'article par au moins un revêtement fonctionnalisé par dessus le motif transféré et la couche de matériau adhésif.

Un tel revêtement supérieur est maintenu sur l'article optique par la couche de matériau adhésif en dehors du motif transféré, et entre les portions de la couche de matériau transférable qui ont été transférées au moyen du tampon. Ce revêtement en plus de sa fonctionnalisation constitue avantageusement un revêtement de protection du motif transféré.

Le matériau transférable peut être un matériau métallique tel que, par exemple, de l'or, de l'aluminium, du chrome, de l'argent, du cuivre, du nickel, du platine, du palladium ou un alliage comprenant l'un au moins de ces métaux. Dans ce cas, la couche de matériau transférable peut être avantageusement déposée à l'étape /a/ sur la surface du tampon par évaporation sous vide ou par pulvérisation cathodique sous vide (sputtering). D'une façon générale, on a pu constater que plus le temps entre le dépôt de la couche métallique sur le tampon et la réalisation de l'étape /c/ est court, meilleur est le transfert de ladite couche métallique sur l'adhésif. Ceci s'explique notamment par une absence de contamination de la couche métallique qui pénalise la qualité de l'adhésion.

Alternativement, la couche de matériau transférable, peut comprendre un empilement de plusieurs couches de matériaux respectifs. Le matériau de l'une au moins des couches de l'empilement peut alors être réfringent. Dans ce cas, la visualisation du motif transféré peut aussi résulter partiellement d'un comportement interférentiel d'un faisceau lumineux utilisé pour éclairer le motif. Le transfert d'un empilement de plusieurs couches matériaux peut ainsi conduire, en fonction de l'épaisseur dudit empilement, à la réalisation d'un hologramme qui affecte très notablement la phase du champ électromagnétique en incidence normale. Un tel transfert permet ainsi de se rapprocher des conditions de réalisation d'un hologramme de phase. On désigne par hologramme de phase une microstructure holographique qui affecte préférentiellement la phase du champ électromagnétique en incidence normale.

La présente invention permet notamment d'envisager l'utilisation de nombreux métaux ou alliages. En effet dans des techniques telles que le microcontact printing, le choix des matériaux utilisables est conditionné par leur capacité à créer des interactions chimiques avec les matériaux devant les recevoir. Dans le cas présent, le matériau à transférer établit avec l'adhésif sensible à la pression, des interactions physiques, beaucoup plus indépendantes de la nature chimique dudit adhésif.

Selon un perfectionnement de l'invention, le matériau adhésif sensible à la pression peut comprendre des composants ayant une fonction optique. Une telle fonction optique peut être, notamment, une fonction photochromique, ou une coloration.

L'invention propose aussi un article optique qui comprend un motif transféré sur une surface de celui-ci en utilisant un procédé tel que décrit précédemment. Cet article peut comprendre une lentille optique, notamment une lentille ophtalmique, et en particulier une telle lentille qui est adaptée pour être assemblée dans une monture de paire de lunettes. Une telle lentille comprend alors elle-même :
- une lentille de base comprenant au moins un substrat organique ou minéral,
- une couche d'un matériau adhésif sensible à la pression, qui a une épaisseur sensiblement uniforme le long de la surface de la lentille de base, et
- des portions d'un matériau transférable formant le motif transféré, par adhésion sur la lentille de base via la couche de matériau adhésif.

La lentille de base comprend notamment un substrat organique. Par substrat, on entend le matériau transparent constitutif de base de la lentille optique et plus particulièrement de la lentille ophtalmique. Ce matériau sert de support à l'empilement d'un ou plusieurs revêtements, et participe à créer la fonction correctrice de la lentille dans le cas d'une lentille ophtalmique correctrice. Dans le cas où l'article est une lentille ophtalmique sont adaptés, par exemple, les substrats du type polycarbonates; polyamides ; polyimides ; polysulfones ; copolymères de polyéthylènetérephtalate et polycarbonate; polyoléfines, notamment polynorbornènes ; polymères et copolymères de diéthylène glycol bis(allylcarbonate); polymères et copolymères (méth)acryliques notamment polymères et copolymères (méth)acryliques dérivés de bisphenol-A; polymères et copolymères thio(méth)acryliques ; polymères et copolymères uréthane et thiouréthane ; polymères et copolymères époxy et polymères et copolymères épisulfide. Dans certains cas, les substrats peuvent être teintés directement dans la masse.

Entre le substrat organique et la couche de matériau adhésif, un ou plusieurs revêtements peuvent optionnellement être présents. Ces revêtements sont notamment les revêtements fonctionnalisés tels que décrits précédemment.

Etant donné que la lentille est essentiellement transparente, lorsque le motif est de type holographique, il peut être adapté pour former une image de lecture lorsqu'un faisceau lumineux est envoyé à travers la lentille à l'endroit du motif.

D'autres particularités et avantages de la présente invention apparaîtront dans la description ci-après d'un exemple de mise en oeuvre non limitatif, en référence aux dessins annexés, dans lesquels :
- les figures 1a et 1b sont des vues en coupe d'un tampon utilisé dans un procédé de transfert de motif selon l'invention ;
- les figures 2a à 2d illustrent des étapes ultérieures de ce procédé ; et
- la figure 3 illustre une étape de lecture d'un motif holographique transféré selon l'invention.

Pour raison de clarté, les dimensions des différents éléments représentés sur ces figures ne sont pas en proportion avec des dimensions ou des rapports de dimensions réels. Par ailleurs, sur toutes les figures, des références identiques correspondent à des éléments identiques.

On décrit maintenant l'invention dans le cadre du transfert sélectif d'un motif holographique sur une lentille ophtalmique de façon à produire un hologramme d'amplitude sur ladite lentille. Dans cette description, des étapes élémentaires du procédé de l'invention qui sont connues individuellement de procédés existants ne sont pas reprises en détail. On s'attache seulement à décrire une succession d'étapes élémentaires qui permet de réaliser un transfert selon l'invention.

Conformément à la figure 1a, un tampon comporte une base 10 et une membrane 11. La membrane 11 possède une surface S supportant le motif et est fixée sur la base 10 par sa face opposée à la surface S. La surface S supportant le motif comporte des creux 12 et des protubérances 13 qui correspondent à deux valeurs différentes de l'épaisseur de la membrane 11. Les creux 12 et les protubérances 13 forment un microrelief de taille micronique, qui définit le motif noté P. P désigne l'arrangement géométrique des portions de surface des protubérances destinées à être mises en contact avec la surface de l'article optique. La membrane 11 peut être à base de polydiméthylsiloxane, ou PDMS. De cette façon, le tampon est à base de PDMS au moins à l'endroit des protubérances 13 de la surface S du tampon. Un tel matériau présente une faible énergie de surface, qui est favorable pour obtenir une bonne qualité de transfert. Cette faible énergie de surface du matériau constitutif de la membrane ainsi que son caractère mou caractérisé par son module élastique est une condition importante car elle garantit un contact parfait entre la couche adhésive et les portions de matériau transférable portées par les protubérances 13 de la surface S du tampon, et garantit également que la couche transférable, notamment métallique se désolidarise aisément du tampon pour adhérer à la couche adhésive. A titre indicatif le PDMS commercial dénommé Sylgard 184 (Dow Corning) présente un module élastique de 2,5 MPa (MégaPascals). D'autres matériaux, en particulier de type matériau élastomère, peuvent aussi convenir pour la membrane 11. Les creux 12 et les protubérances 13 peuvent être formés de différentes façons. Par exemple, un liquide contenant des monomères précurseurs de l'élastomère peut être versé dans un moule de membrane pourvu du motif P, puis polymérisé à l'intérieur du moule par chauffage ou par irradiation avec une lumière UV. La membrane 11 qui est obtenue après démoulage est fixée sur la base 10. Pour une membrane 11 ainsi réalisée, les creux 12 et les protubérances 13 peuvent avoir des dimensions comprises entre 10 micromètres et 50 nanomètres, par exemple, mesurées parallèlement à la membrane 11. La profondeur des creux 12 peut être de 0,1 micromètre à 30 micromètres, avantageusement de 0,1 à 10 micromètres. Ainsi les creux 12 et les protubérances 13 forment bien un microrelief qui définit le motif P de taille micronique.

La surface S peut se déformer lors d'une application de celle-ci contre la surface réceptrice, (dans le cas présent la surface d'une lentille optique munie d'au moins une couche de PSA), en fonction de la courbure de cette dernière. Cette déformation peut résulter d'un écrasement de la membrane qui varie le long de la surface S, et/ou d'un recul variable de la membrane lorsqu'elle est fixée d'une façon appropriée sur la base 10.

La figure 1b est une vue élargie de la membrane 11. Une couche 14, par exemple en or ou en aluminium, est déposée sur la membrane 11 et se répartit sur les zones du microrelief (12b et 13) qui constituent des plans orthogonaux à la direction principale dans laquelle s'est effectué le dépôt de matière. La couche 14 peut avoir une épaisseur e de 30 nanomètres, par exemple. Elle peut être déposée sur la surface S de plusieurs façons, notamment par évaporation sous vide d'une quantité d'or ou d'aluminium contenue dans un creuset et chauffée par effet Joule.

Conformément à la figure 2a, une lentille ophtalmique, qui est constituée initialement par une lentille de base 1, présente par exemple une face antérieure convexe et une face postérieure concave. Dans la suite, le motif P est transféré sur la face antérieure de la lentille, mais il est entendu qu'un transfert similaire peut être effectuée sur la face postérieure. Ainsi l'invention est particulièrement adaptée pour transférer un motif sur une surface pseudo-sphérique. Dans le cadre de l'invention, on entend par surface pseudo-sphérique une surface concave ou convexe continue, c'est-à-dire dépourvue de trous ou de marches. En général, au moins l'une des deux faces d'une lentille optique est pseudo-sphérique, de sorte que la variation d'épaisseur de la lentille qui en résulte lui confère un pouvoir optique. Des verres ophtalmiques afocaux, unifocaux, bifocaux, trifocaux et progressifs ont tous au moins une face pseudo-sphérique. Une surface sphérique correspond à un cas particulier de surface pseudo-sphérique, pour lequel des rayons de courbure de la surface selon deux directions perpendiculaires sont égaux. Dans la suite, l'expression «surface pseudo-sphérique» est entendue comme incluant le cas particulier des surfaces sphériques.

La lentille ophtalmique 1 peut être d'un type quelconque tel que décrit précédemment. Par lentille ophtalmique, on entend les lentilles s'adaptant notamment à une monture de lunette et dont la fonction est de protéger l'oeil et/ou corriger la vue.

Préférentiellement, la surface de la lentille 1 qui est destinée à recevoir le motif P est d'abord nettoyée. Pour cela, la lentille peut être soumise à un traitement corona ou à un traitement par plasma, mais un procédé de nettoyage au moyen d'une ou de plusieurs solutions détergentes et/ou de rinçage peut aussi être utilisé.

Une couche d'un matériau adhésif sensible à la pression, référencée 2 sur les figures 2a-2d, est appliquée sur la face antérieure de la lentille 1. Selon une méthode d'application de la couche de matériau adhésif qui est particulièrement avantageuse, celle-ci se présente initialement sous forme d'une pellicule continue enserrée entre deux films pelables (ou liners). Un premier des films est pelé, puis la face de la pellicule de matériau adhésif qui est ainsi exposée est appliquée contre la face antérieure de la lentille 1 (figure 2a). Lors de cette étape, la pellicule 2 protégée par le second film pelable est pressée sur la lentille 1, la pression étant exercée à la surface du second film pelable,, référencé 20. Une fois que la pellicule 2 est appliquée sur toute la face antérieure de la lentille 1, le second film 20 est pelé à son tour (figure 2b). La pellicule (ou film) de matériau adhésif est ainsi transférée sur la lentille 1, en recouvrant intégralement la face antérieure de celle-ci. Un tel procédé de dépôt de la couche adhésive 2 sur la lentille 1 est avantageux en ce qu'il ne met en oeuvre aucune phase liquide. Il peut alors être exécuté rapidement sans appareillage onéreux, d'une façon compatible avec un grand nombre de transferts réalisés successivement.

Grâce à l'utilisation d'un matériau adhésif sensible à la pression, la face antérieure de la lentille 1 qui est recouverte par la couche 2 présente un pouvoir adhésif permanent. De façon connue, ce pouvoir adhésif provient d'un comportement électrostatique et rhéologique spécifique du matériau de la couche 2. Plusieurs matériaux adhésifs sensibles à la pression peuvent être utilisés pour constituer la couche 2 et notamment les PSA choisis parmi la famille des polyacrylates, la famille des copolymères à blocs à base de styrène, et les mélanges à base de caoutchouc naturel, avantageusement parmi la famille des polyacrylates. Plus particulièrement on peut citer, à titre d'exemples et de façon non limitative, les PSA de compositions générales à base de polyacrylates, polyméthacrylates, à base de copolymères éthyléniques tels que les éthylène vinyl acétates, éthylène éthyl acrylates, et éthylène éthyl méthacrylates, les PSA à base de caoutchoucs synthétiques et élastomères incluant les silicones, les polyuréthanes, les styrènes butadiènes, les polybutadiènes, les polyisoprènes, les polypropylènes, les polyisobutylène, les PSA à base de polymères de base de nitriles ou acrylonitriles, les PSA à base de polychloroprène, les PSA à base de copolymères à blocs comprenant polystyrène, polyéthylène, polypropylène, polyisoprène, polybutadiène tels que styrène-isoprène-styrène, les PSA à base de copolymères polyvinylpyrrolidone et vinylpyrrolidone ainsi que des compositions ou mélanges (de phases continues ou discontinues) des précédents, ainsi que des copolymères à blocs obtenus à partir des précédents. Ces PSA peuvent également comprendre au sein de leur formulation un ou plusieurs additifs choisis notamment parmi les agents de pégosité (tackifier), les plastifiants, les liants, les antioxydants, les stabilisants, les pigments, les colorants, les agents dispersants, et les agents diffusants

La surface S du tampon, et plus spécifiquement les protubérances 13 et les creux 12b, qui porte la couche métallique 14 est alors appliquée contre la face antérieure de la lentille 1 recouverte par la couche 2. Pour cela, le tampon est approché selon une direction sensiblement perpendiculaire à la face de la lentille (figure 2c). L'application est effectuée avec une pression suffisante pour obtenir une bonne cohésion de la couche métallique 14 avec la couche de matériau adhésif 2, au niveau des protubérances 13 de la surface S. En outre, cette pression n'est pas trop importante afin d'éviter que du matériau adhésif de la couche 2 ne pénètre dans les creux 12 pendant l'application. Autrement dit, les protubérances 13 de la surface S ne pénètrent pas dans la couche 2. De cette façon, seules des portions de la couche métallique 14 qui sont situées initialement sur les protubérances 13 entrent en contact avec la couche adhésive 2. Lorsque le tampon est retiré, ces portions de la couche 14, référencées 3 sur la figure 2d, restent sélectivement collées sur la lentille 1. Elles ont des formes qui reproduisent celles des protubérances 13 de la surface S du tampon, parallèlement à la surface de la lentille, de sorte que le motif P est transféré sur la lentille 1. Le matériau de la couche 14 possède donc une fonction de matériau de transfert du motif P sur la lentille 1. Les portions de la couche 14 qui sont situées dans les creux 12 (et spécifiquement dans les zones 12b) de la surface S sont retirées avec le tampon lorsque celui-ci est écarté de la lentille 1, puisqu'elles ne sont pas entrées en contact avec la couche de matériau adhésif 2. Des intervalles dépourvus de matériau métallique, référencés 4 sur la figure 2d et qui correspondent aux creux 12 de la surface S, séparent ainsi les portions 3 sur la face antérieure de la lentille 1. Un tel transfert est désigné comme sélectif dans le cadre de l'invention. Les inventeurs ont constaté que des pressions d'application du tampon sur la lentille 1, qui sont comprises entre 0,25 et 70 grammes par millimètre-carré de surface des protubérances, préférentiellement entre 0,25 et 10 grammes, procurent des qualités de transfert très satisfaisantes. En outre, l'utilisation d'un matériau adhésif sensible à la pression laisse de la latitude pour ce qui concerne la durée d'application du tampon contre la lentille 1.

La sélectivité du transfert est directement liée à la force appliquée sur le tampon lors du contact tampon-couche adhésive. Soit Fₐ la valeur limite de cette force F pour laquelle la couche adhésive résiste à l'enfoncement du tampon. Cette valeur est liée également aux propriétés mécaniques de la couche de PSA. Pour réaliser un transfert sélectif de qualité, il est nécessaire dans le cadre de l'invention que la force F appliquée soit inférieure à la force Fa. En d'autre terme la force F appliquée doit être suffisamment faible pour ne pas faire pénétrer l'adhésif sensible à la pression dans les creux du motif porté par le tampon. Tout particulièrement, la force appliquée doit être suffisamment faible pour éviter que l'adhésif ne rentre en contact avec le sommet des creux revêtus d'une couche de matériau transférable, et suffisamment forte pour garantir la cohésion du transfert de la couche métallique du tampon sur au moins une partie de la surface du PSA. Naturellement en plus des facteurs influençant la sélectivité du transfert précédemment cité, l'homme du métier comprend aisément que la taille du motif, soit la distance entre les creux et les protubérances et plus particulièrement la hauteur des creux, sont des paramètres pouvant également influer sur la qualité du transfert.

Il est donc important de pouvoir estimer pour un matériau adhésif donné la force limite à partir de laquelle le matériau adhésif commence à pénétrer dans les creux du motif. La pression appliquée est un paramètre important, mais il est nécessaire de prendre également en compte le module du matériau constitutif du tampon, le module du PSA en lui-même, le pouvoir adhésif de PSA ainsi que l'épaisseur de PSA déposée sur l'article optique. Un compromis judicieux entre ces différents paramètres est nécessaire pour garantir une sélectivité de transfert du motif du tampon sur l'article optique, tant dans sa résolution que dans sa qualité optique.

Afin de protéger le motif transféré sur la lentille, une couche supérieure 5 (figure 2d), qui peut être un film protecteur par exemple, est appliquée sur la face antérieure de la lentille 1. Ce film 5 recouvre les portions 3 du motif transféré P, et est maintenu sur la lentille 1 par la couche de matériau adhésif 2 en dehors du motif P. Une telle couche supérieure peut posséder en outre une fonction optique telle que, par exemple, une fonction de polarisation, d'absorption, de coloration ou de filtrage d'une lumière qui traverse la lentille 1. On peut également protéger le motif transféré sur la lentille avec une couche résistant à l'abrasion, soit avec une couche de primaire, améliorant la résistance au choc de l'article, sur laquelle on peut déposer une couche résistante à l'abrasion, la couche de primaire améliorant également l'ancrage de cette couche résistant à l'abrasion. On peut encore déposer sur la couche résistant à l'abrasion un revêtement anti-reflets et enfin on peut également revêtir ce revêtement anti-reflet d'un revêtement anti-salissures hydrophobe et oléophobe. Un revêtement antistatique peut également être présent. Les différentes combinaisons dans le dépôt de ces couches sont bien connues dans le traitement des lentilles ophtalmiques.

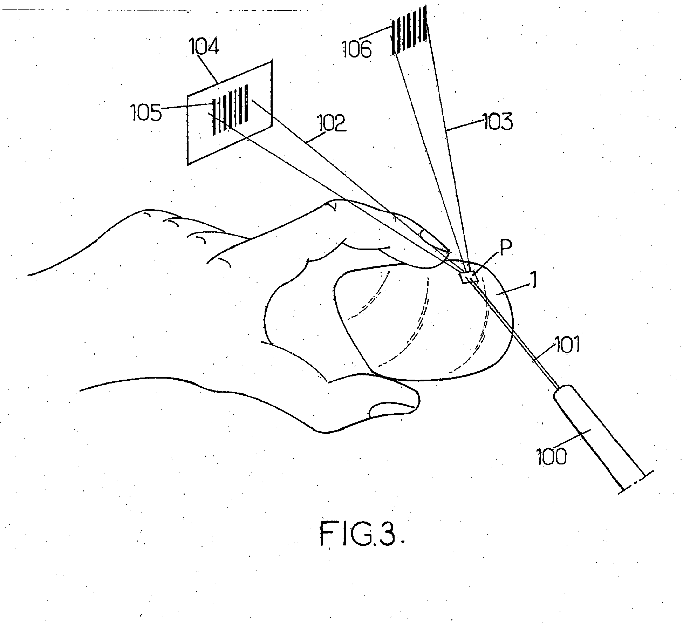

Dans le cas où le motif transféré constitue une structure diffractive holographique, une image de lecture diffractée par l'hologramme et restituant l'information qu'il contient peut alors être visualisée par transmission ou par réflexion d'un faisceau lumineux sur la lentille 1, à l'endroit du motif transféré P. Pour cela, conformément à la figure 3, le motif holographique P est éclairé par un stylo laser 100 de faible puissance, par exemple de couleur rouge de longueur d'onde 645 nanomètres. De façon connue, la distance entre le laser 100 et le motif P n'est pas critique pour la reconstruction de l'image. Le faisceau lumineux 101 issu du laser 100 est diffracté par le motif P, de sorte qu'il est divisé en au moins deux faisceaux secondaires 102 et 103 après avoir traversé la lentille 1. Chacun des deux faisceaux 102 et 103 reconstruit une image à une distance de la lentille 1 qui peut être comprise entre 20 et 50 centimètres, par exemple. Cette image est révélée en disposant un objet 104 servant d'écran sur le trajet de l'un des deux faisceaux 102 ou 103. Du fait que la lumière utilisée est issue d'un laser, l'objet qui sert d'écran peut être quelconque. Eventuellement, l'image peut aussi être projetée sur un capteur d'image, par exemple de type CCD (pour « Charge Coupled Device ») ou CMOS (pour «Complementary Metal Oxide Semiconductor»), pour en permettre une reconnaissance rapide et précise. Sur la figure 3, les images qui correspondent à chacun des deux faisceaux 102 et 103 sont référencées 105 et 106, respectivement. Elles correspondent à deux ordres de diffraction opposés, par exemple +1 et -1, de sorte que les deux images 105 et 106 sont inversées l'une par rapport à l'autre. L'image qui n'est pas inversée, ou «image directe», correspond à l'ordre de diffraction +1 et est l'image de lecture du motif holographique P.

La lentille ophtalmique 1 peut être destinée à être assemblée dans une monture de paire de lunettes. Afin de ne pas gêner la vision d'un porteur des lunettes, le motif P peut être de petites dimensions et à proximité d'un bord de la lentille 1 (figure 3). Par exemple, le motif transféré P peut occuper une partie de la face de la lentille 1 qui est inférieure à 25 mm². Le motif peut également être introduit sur une partie de la lentille appelée à être détourée, Dans ce cas le motif est principalement introduit dans un but de traçabilité du produit final. Une telle configuration est particulièrement intéressante si le motif transféré correspond à un hologramme généré par ordinateur de type CGH et qui est constitué de pixels. Un tel hologramme peut ainsi contenir une quantité d'information très importante sur un espace très petit compris avantageusement entre 15 mm² et 0,5 mm², permettant par exemple de garantir une traçabilité complète du produit dans la chaîne de production et de logistique.

Alternativement, le motif transféré P peut occuper toute la face antérieure de la lentille 1, par exemple lorsqu'il confère à la lentille une fonction optique particulière. Ce peut être le cas, notamment, lorsque le motif transféré P est constitué d'un ensemble de fils conducteurs électriquement et parallèles à une direction déterminée, pour filtrer de la lumière qui traverse la lentille en fonction d'une polarisation de celle-ci. Typiquement, les fils conducteurs ont une largeur de quelques dizaines de nanomètres et sont espacés deux à deux de quelques dizaines de nanomètres.

De nombreuses modifications du procédé de transfert qui a été décrit en détail ci-dessus peuvent être introduites, tout en conservant certains, au moins, des avantages de l'invention. Par exemple, une couche intermédiaire peut être déposée sur la membrane 11 du tampon avant la couche de matériau transférable 14, pour ajuster une énergie de surface entre la couche 14 et la membrane 11 du tampon. Un tel ajustement peut encore améliorer le transfert des portions 3 de matériau transférable sur la lentille 1. Par ailleurs, le motif transféré sur la lentille peut être un motif diffractant, c'est-à-dire dont la visibilité résulte d'une diffraction de la lumière par les portions 3 et/ou les intervalles 4 présents entre celles-ci. Enfin, le motif qui est transféré peut être visible dans des conditions d'éclairement ambiant, ou lorsqu'il est éclairé par un faisceau laser.

### EXEMPLE:

### 1. Couche adhésive (2)

L'adhésif sensible à la pression PSA (2) utilisé est un produit commercial de la société Nitto Denko de référence commerciale CS9621. Il s'agit d'un film de matière adhésive à base d'acrylique modifié présentant une épaisseur de 25 µm, conditionné entre deux feuilles de protection, chaque feuille de protection recouvrant l'intégralité de chaque face du film de PSA.

La couche adhésive est collée sur la face convexe d'une lentille ophtalmique à base d'Orma® (Essilor), d'un rayon de courbure convexe 120 mm, à l'aide d'un dispositif comprenant un module à vide et un tampon en silicone. La lentille est positionnée à l'intérieur du module à vide sur un porte-lentille. Le module à vide est surmonté par un dispositif d'encliquetage permettant d'une part de fermer ledit module à vide et d'autre part de maintenir le PSA. Une séquence spécifique de mise en action du module à vide et du tampon permet de réaliser la lamination du PSA sur la lentille présentant une surface courbe. Un tel dispositif ainsi que son procédé de mise en oeuvre est notamment décrit dans la demande de brevet FR 05 03306.

### 2. Motif à transférer (3)

Le procédé cité en exemple est optimisé pour un motif holographique numérique composé de pixels élémentaires carrés de dimension 1 µm (micromètre) de côté.

Pour ce faire, la membrane 11 du tampon porte à sa surface un microrelief consistant en des creux 12 et des protubérances 13 de profil rectangulaire comme schématisé sur la figure 1.a. La profondeur du microrelief (différence d'altitude entre les creux 12b et les protubérances 13) est de 1µm.

Le motif holographique a des caractéristiques telles que la largeur des protubérances du microrelief porté par la membrane 11 et mesurée selon un axe parallèle à un bord des pixels carrés varie entre 1µm et 85µm selon la zone du tampon considérée..

### 3. Tampon portant le motif (11) (Fig. 1a.):

Le microrelief définissant le motif à transférer est moulé dans du Sylgard® 184 (Dow Corning,) (11). Les propriétés de ce matériau après polymérisation à 100°C durant 1 heure sont les suivantes:
   - énergie de surface : 22mN/m
   - Module d'Young : 2,5MPa.

### 4. Couche métallique (14)

La couche métallique est obtenue par évaporation sous vide. Le matériau métallique adéquat est disposé dans un creuset, et chauffé par effet Joule. L'évaporation est effectuée sur le tampon en Sylgard® 184 n'ayant subi aucune préparation de surface préalable.

Dans le cas de l'or ; une couche de 30 nm d'épaisseur est obtenue en évaporant de l'or d'une pureté de 99.9%.

Dans le cas de l'aluminium ; une couche de 30 nm d'épaisseur est obtenue en évaporant des grenailles d'aluminium d'une pureté de 99.5%.

L'évaporation de la couche métallique a lieu dans la même journée que l'étape de transfert sur la lentille ophtalmique.

### 5. Transfert (Fig. 2c.)

Le tamponnage se fait orthogonalement à la surface.

La pression de tamponnage optimale est obtenue de manière empirique, pour une couche de 30nm d'or ou d'aluminium, sur le PSA Nitto CS9621. La pression optimale, pour réaliser un hologramme d'amplitude efficace correspondant à un transfert sélectif de l'or ou de l'aluminium présent sur les protubérances du tampon sur le film d'adhésif sensible à la pression, est comprise entre 0,5 g/mm² et 4,5 g/mm². La surface prise en compte pour le calcul de la pression est celle des protubérances 13 constituant le motif P.

Le tableau ci-après présente les résultats de différentes conditions testées:

| Pression appliquée sur le tampon | Résultat |
|---|---|
| 1 g/mm² | Transfert parfaitement sélectif. |
| 1.5 g/mm² | |
| 3.8 g/mm² | Transfert sélectif, avec quelques zones défectueuses. |

| Limite transfert sélectif : P = 4.5 g/mm² | |
|---|---|
| 4.9 g/mm² | Transfert intégral. |
| 6_{.}1 g/mm² | |

### Pressions appliquées pour l'exemple du transfert sélectif d'or :

La pression appliquée pour le tamponnage du tampon sur la face convexe d'une lentille ophtalmique (d'un rayon de courbure 120 mm) recouverte d'une couche de PSA Nitto Denko CS9621 (et d'épaisseur 25µm) est de 1.5 g/mm². Le transfert de la couche d'or de 30nm est sélectif ; l'hologramme obtenu est un hologramme d'amplitude.

Un autre exemple de la technique de transfert est obtenu en remplaçant le PSA Nitto Denko CS9621 (d'épaisseur 25µm) par le PSA Nitto Denko HJ9150 d'épaisseur 50µm. Tous les autres paramètres restent identiques à l'exemple cité ci-dessus.

### Pressons appliquées pour l'exemple du transfert sélectif d'aluminium :

La pression appliquée pour le tamponnage du tampon sur la face convexe d'une lentille ophtalmique (d'un rayon de courbure 120 mm) recouverte d'une couche de PSA Nitto Denko CS9621 (et d'épaisseur 25µm) est de 4 g/mm². Le transfert de la couche d'aluminium de 30nm est sélectif ; l'hologramme obtenu est un hologramme d'amplitude.

## Revendications

1. Procédé de transfert d'un motif micronique sur une surface d'un article optique (1) qui comprend les étapes suivantes :
/a/ déposer une couche d'au moins un matériau transférable (14) sur une surface (S) d'un tampon (11) comportant des creux (12) et des protubérances (13), constituant le microrelief correspondant au motif (P), à définition micronique ou sub-micronique, à transférer ;
/b/ déposer une couche d'un adhésif sensible à la pression (2) sur la surface du substrat de l'article optique;
/c/ mettre en contact la surface (S) du tampon qui comprend la couche de matériau transférable (14) avec la couche d'adhésif sensible à la pression (2);
/d/ appliquer une pression sur le tampon; est
/e/ écarter le tampon de la surface de l'article optique comprenant la couche d'adhésif sensible à la pression

2. Procédé selon la revendication 1 suivant lequel lors de l'étape /d/ la pression appliquée sur le tampon entraîne un transfert sélectif des portions (3) de la couche de matériau transférable (14), situées sur les protubérances (13) de la surface du tampon (11), sur la surface de l'article optique.

3. Procédé selon l'une quelconque des revendications 1 ou 2 dans lequel le motif micronique comprend un ou plusieurs motifs élémentaires chaque motif élémentaire présentant une taille comprise entre 10 µm et 50 nm, avantageusement entre 5 µm et 100 nm, et très avantageusement entre 3 µm et 150 nm.

4. Procédé selon l'une des revendications précédentes, suivant lequel le motif transféré (P) est un motif diffractant lorsque ledit motif est éclairé par un faisceau lumineux.

5. Procédé selon l'une des revendications précédentes, suivant lequel le motif transféré (P) est un motif holographique.

6. Procédé selon la revendication 5, suivant lequel le motif transféré (P) est un motif holographique de type hologramme d'amplitude.

7. Procédé selon la revendication 5, suivant lequel le motif transféré est un motif holographique de type hologramme numérique constitué d'un ensemble de pixels contigus, chaque pixel présentant une surface comprise entre 0,2 µm² et 25 µm², avantageusement entre 0,2 µm² et 4 µm².

8. Procédé selon l'une des revendications précédentes, suivant lequel le motif transféré (P) occupe une partie réduite d'une face de l'article optique (1).

9. Procédé selon la revendication 8, suivant lequel le motif transféré (P) occupe une partie de la face de l'article optique (1) inférieure à 25 mm².

10. Procédé selon l'une des revendications 1 à 7, suivant lequel le motif transféré (P) occupe toute une face de l'article optique (1).

11. Procédé selon la revendication 10, suivant lequel le motif transféré (P) comprend un réseau de fils parallèles conducteurs électriquement.

12. Procédé selon l'une des revendications précédentes, suivant lequel l'article optique (1) est choisi parmi une lentille optique d'instrumentation, une lentille de visée, une visière et une lentille ophtalmique.

13. Procédé selon la revendication 12, suivant lequel l'article optique (1) est une lentille ophtalmique choisie parmi une lentille afocale, unifocale, bifocale, trifocale et progressive.

14. Procédé selon l'une quelconque des revendications 12 ou 13 ensemble les revendications 6 à 9, suivant lequel le motif holographique (P) est adapté pour former une image de lecture lorsqu'un faisceau lumineux (101) est envoyé à travers la lentille (1) à l'endroit dudit motif.

15. Procédé selon l'une des revendications précédentes, suivant lequel la couche de matériau adhésif sensible à la pression (2) est déposée sur la surface de l'article optique (1) par un procédé de centrifugation, de spray, ou de jet de matière à partir d'une imprimante

16. Procédé selon l'une des revendications 1 à 14, suivant lequel la couche de matériau adhésif sensible à la pression (2) est initialement supportée par au moins une feuille de protection (20), puis est appliquée sur la surface de l'article optique (1) à travers ladite feuille, et suivant lequel ladite feuille est ensuite pelée de façon à laisser la couche de matériau adhésif sur la surface de l'article optique.

17. Procédé selon l'une des revendications précédentes, suivant lequel l'épaisseur de la couche de matériau adhésif sensible à la pression est comprise entre 0,5 µm et 300 µm, avantageusement entre 5 µm et 100 µm, et très préférentiellement entre 10 µm et 50 µm.

18. Procédé selon l'une des revendications précédentes comprenant en outre l'étape suivante, qui est réalisée après l'étape /a/ et/ou l'étape/e/:
/f/ recouvrir la surface de l'article par un ou plusieurs revêtements fonctionnalisés.

19. Procédé selon la revendication 18, suivant lequel le revêtement fonctionnalisé présente une fonctionnalité de type anti-choc, anti-abrasion, antireflet, antisalissure, antibuée, antistatique, polarisante, colorante ou photochromique.

20. Procédé selon la revendication 18, suivant lequel l'étape supplémentaire /f/ est réalisée après l'étape /e/.

21. Procédé selon l'une des revendications précédentes, suivant lequel le matériau transférable est un matériau métallique.

22. Procédé selon la revendication 21, suivant lequel le matériau transférable est choisi parmi l'or, l'aluminium, le chrome, l'argent, le cuivre, le nickel, le platine, le palladium et un alliage comprenant l'un au moins de ces métaux.

23. Procédé selon l'une quelconque des revendications 21 ou 22, suivant lequel la couche de matériau transférable est déposée à l'étape /a/ sur la surface du tampon (S) par évaporation sous vide ou par pulvérisation cathodique.

24. Procédé selon l'une des revendications 1 à 20, suivant lequel la couche de matériau transférable (14) comprend un empilement de plusieurs couches de matériaux respectifs.

25. Procédé selon la revendication 24, suivant lequel le matériau de l'une au moins des couches de l'empilement est réfringent.

26. Procédé selon l'une des revendications précédentes, suivant lequel le tampon est à base de polydiméthylsiloxane au moins à l'endroit des protubérances (13) de la surface du tampon (S).

27. Procédé selon l'une des revendications précédentes suivant lequel le tampon présente une approche parallèle à la normale du point de contact sur le substrat de l'article optique.

28. Procédé selon l'une des revendications précédentes, suivant lequel la surface du tampon (S) est adaptée pour se déformer lors de l'application contre la surface de l'article optique (1) à l'étape /d/, en fonction d'une courbure de ladite surface de l'article.

29. Procédé selon l'une des revendications précédentes, comprenant en outre une étape de traitement de la surface de l'article optique (1), effectuée avant l'étape /b/.

30. Procédé selon l'une des revendications précédentes suivant lequel le matériau adhésif sensible à la pression est choisi parmi la famille des polyacrylates, la familles des copolymères à blocs à base de styrène, et les mélanges à base de caoutchouc naturel.

31. Procédé selon l'une quelconque des revendications précédentes, suivant lequel le matériau adhésif sensible à la pression comprend des composants ayant une fonction optique choisie parmi la coloration et le photochromisme.

32. Procédé selon l'une des revendications précédentes suivant lequel les creux (12) et les protubérances (13) présentent des dimensions comprises entre 10 micromètres et 50 nanomètres mesurées parallèlement à la membrane (11).

33. Procédé selon l'une des revendications précédentes suivant lequel la profondeur des creux (12) est comprise entre 0,1 µm et 30 µm, avantageusement entre 0,1 µm et 10 µm.

34. Procédé selon l'une des revendications précédentes suivant lequel la pression d'application du tampon sur l'article optique (1) est comprise entre 0,25 et 70 grammes par millimètre-carré de surface des protubérances, préférentiellement entre 0,25 et 10 grammes par millimètre-carré.

35. Article optique (1) représentant une lentille ophtalmique, ladite lentille comprenant elle-même :
- une lentille de base comprenant au moins un substrat organique ou minéral,
- une couche d'un matériau adhésif sensible à la pression, qui a une épaisseur sensiblement uniforme le long d'une surface de la lentille de base, et
- des portions d'un matériau transférable formant un motif transféré (P),
le motif étant transféré sur la surface de la lentille de base par un procédé selon l'une quelconque des revendications précédentes, par adhésion sur la lentille de base via la couche de matériau adhésif.

## Patentansprüche

1. Verfahren zur Übertragung eines Mikromusters auf eine Fläche eines optischen Gegenstands (1), das die folgenden Schritte enthält:
/a/Aufbringen einer Schicht mindestens eines übertragbaren Materials (14) auf eine Fläche (S) eines Stempels (11), der Vertiefungen (12) und Vorsprünge (13) aufweist, die das zu übertragende, dem Muster (P) entsprechende Mikrorelief mit mikrometrischer oder submikrometrischer Definition bilden;
/b/Aufbringen einer Schicht eines druckempfindlichen Klebstoffs (2) auf die Fläche des Substrats des optischen Gegenstands;
/c/Inkontaktbringen der die Schicht aus übertragbarem Material (14) enthaltenden Fläche (S) des Stempels mit der druckempfindlichen Klebstoffschicht (2);
/d/Ausüben eines Drucks auf den Stempel; und
/e/Entfernen des Stempels von der die druckempfindliche Klebstoffschicht enthaltenden Fläche des optischen Gegenstands.

2. Verfahren nach Anspruch 1, gemäß dem im Schritt /d/ der auf den Stempel ausgeübte Druck eine selektive Übertragung der Abschnitte (3) der Schicht von übertragbarem Material (14), die sich auf den Vorsprüngen (13) der Fläche des Stempels (11) befinden, auf die Fläche des optischen Gegenstands bewirkt.

3. Verfahren nach einem der Ansprüche 1 oder 2, wobei das Mikromuster eines oder mehrere Elementarmuster enthält, wobei jedes Elementarmuster eine Größe zwischen 10 µm und 50 nm, vorteilhafterweise zwischen 5 µm und 100 nm, und sehr vorteilhafterweise zwischen 3 µm und 150 nm aufweist.

4. Verfahren nach einem der vorhergehenden Ansprüche, gemäß dem das übertragene Muster (P) ein Beugungsmuster ist, wenn das Muster von einem Lichtstrahl beleuchtet wird.

5. Verfahren nach einem der vorhergehenden Ansprüche, gemäß dem das übertragene Muster (P) ein holografisches Muster ist.

6. Verfahren nach Anspruch 5, gemäß dem das übertragene Muster (P) ein holografisches Muster von der Art Amplitudenhologramm ist.

7. Verfahren nach Anspruch 5, gemäß dem das übertragene Muster ein holografisches Muster von der Art digitales Hologramm ist, das aus einer Einheit von aneinander grenzenden Pixeln besteht, wobei jedes Pixel eine Fläche zwischen 0,2 µm² und 25 µm², vorteilhafterweise zwischen 0,2 µm² und 4 µm², aufweist.

8. Verfahren nach einem der vorhergehenden Ansprüche, gemäß dem das übertragene Muster (P) einen reduzierten Bereich einer Seite des optischen Gegenstands (1) einnimmt.

9. Verfahren nach Anspruch 8, gemäß dem das übertragene Muster (P) einen Bereich der Seite des optischen Gegenstands (1) von weniger als 25 mm² einnimmt.

10. Verfahren nach einem der Ansprüche 1 bis 7, gemäß dem das übertragene Muster (P) eine ganze Seite des optischen Gegenstands (1) einnimmt.

11. Verfahren nach Anspruch 10, gemäß dem das übertragene Muster (P) ein Netz von elektrisch leitenden parallelen Drähten enthält.

12. Verfahren nach einem der vorhergehenden Ansprüche, gemäß dem der optische Gegenstand (1) unter einer optischen Instrumentenlinse, einer Ziellinse, einem Visier und einer ophthalmischen Linse ausgewählt wird.

13. Verfahren nach Anspruch 12, gemäß dem der optische Gegenstand (1) eine ophthalmische Linse ist, die unter einer afokalen, unifokalen, bifokalen, trifokalen und progressiven Linse ausgewählt wird.

14. Verfahren nach einem der Ansprüche 12 oder 13 zusammen mit den Ansprüchen 6 bis 9, gemäß dem das holografische Muster (P) geeignet ist, um ein Lesebild zu formen, wenn ein Lichtstrahl (101) durch die Linse (1) an die Stelle des Musters geschickt wird.

15. Verfahren nach einem der vorhergehenden Ansprüche, gemäß dem die druckempfindliche Klebstoffschicht (2) auf die Fläche des optischen Gegenstands (1) durch ein Verfahren des Zentrifugierens, Sprühens oder Materialstrahls ausgehend von einem Drucker aufgebracht wird.

16. Verfahren nach einem der Ansprüche 1 bis 14, gemäß dem die druckempfindliche Klebstoffschicht (2) anfangs von mindestens einer Schutzfolie (20) getragen wird, dann über die Folie auf die Fläche des optischen Gegenstands (1) aufgelegt wird, und gemäß dem die Folie anschließend so abgezogen wird, dass die Klebstoffschicht auf der Fläche des optischen Gegenstands gelassen wird.

17. Verfahren nach einem der vorhergehenden Ansprüche, gemäß dem die Dicke der druckempfindlichen Klebstoffschicht zwischen 0,5 µm und 300 µm, vorteilhafterweise zwischen 5 µm und 100 µm, und sehr bevorzugt zwischen 10 µm und 50 µm liegt.

18. Verfahren nach einem der vorhergehenden Ansprüche, das außerdem den folgenden Schritt enthält, der nach dem Schritt /a/ und/oder dem Schritt /e/ ausgeführt wird:
/f/ Bedecken der Fläche des Gegenstands mit einer oder mehreren funktionalisierten Beschichtungen.

19. Verfahren nach Anspruch 18, gemäß dem die funktionalisierte Beschichtung eine Funktionalität der Art stoßfest, abriebfest, reflexfrei, schmutzabweisend, beschlagfrei, antistatisch, polarisierend, färbend oder photochromatisch aufweist.

20. Verfahren nach Anspruch 18, gemäß dem der zusätzliche Schritt /f/ nach dem Schritt /e/ ausgeführt wird.

21. Verfahren nach einem der vorhergehenden Ansprüche, gemäß dem das übertragbare Material ein metallisches Material ist.

22. Verfahren nach Anspruch 21, gemäß dem das übertragbare Material unter Gold, Aluminium, Chrom, Silber, Kupfer, Nickel, Platin, Palladium und einer Legierung ausgewählt wird, die mindestens eines dieser Metalle enthält.

23. Verfahren nach einem der Ansprüche 21 oder 22, gemäß dem die Schicht aus übertragbarem Material im Schritt /a/ durch Vakuumaufdampfung oder durch Kathodenzerstäubung auf die Fläche des Stempels (S) aufgebracht wird.

24. Verfahren nach einem der Ansprüche 1 bis 20, gemäß dem die Schicht aus übertragbarem Material (14) eine Stapelung mehrerer Schichten jeweiliger Materialien enthält.

25. Verfahren nach Anspruch 24, gemäß dem das Material mindestens einer der Schichten der Stapelung lichtbrechend ist.

26. Verfahren nach einem der vorhergehenden Ansprüche, gemäß dem der Stempel auf der Basis von Polydimethylsiloxan mindestens an der Stelle der Vorsprünge (13) der Fläche des Stempels (S) ist.

27. Verfahren nach einem der vorhergehenden Ansprüche, gemäß dem der Stempel eine Annäherung parallel zur Normalen des Kontaktpunkts auf dem Substrat des optischen Gegenstands aufweist.

28. Verfahren nach einem der vorhergehenden Ansprüche, gemäß dem die Fläche des Stempels (S) geeignet ist, um sich beim Anlegen gegen die Fläche des optischen Gegenstands (1) im Schritt /d/ abhängig von einer Krümmung der Fläche des Gegenstands zu verformen.

29. Verfahren nach einem der vorhergehenden Ansprüche, das außerdem einen Schritt der Behandlung der Fläche des optischen Gegenstands (1) enthält, der vor dem Schritt /b/ ausgeführt wird.

30. Verfahren nach einem der vorhergehenden Ansprüche, gemäß dem das druckempfindliche Klebstoffmaterial aus der Familie der Polyacrylate, der Familie der Block-Copolymere auf der Basis von Styrol und den Mischungen auf der Basis von natürlichem Kautschuk ausgewählt wird.

31. Verfahren nach einem der vorhergehenden Ansprüche, gemäß dem das druckempfindliche Klebstoffmaterial Bestandteile enthält, die eine optische Funktion haben, die aus der Färbung und der Photochromie ausgewählt wird.

32. Verfahren nach einem der vorhergehenden Ansprüche, gemäß dem die Vertiefungen (12) und die Vorsprünge (13) Abmessungen aufweisen, die zwischen 10 Mikrometer und 50 Nanometer liegen, gemessen parallel zur Membran (11).

33. Verfahren nach einem der vorhergehenden Ansprüche, gemäß dem die Tiefe der Vertiefungen (12) zwischen 0,1 µm und 30 µm, vorteilhafterweise zwischen 0,1 µm und 10 µm, liegt.

34. Verfahren nach einem der vorhergehenden Ansprüche, gemäß dem der Anlegedruck des Stempels auf den optischen Gegenstand (1) zwischen 0,25 und 70 Gramm pro Quadratmillimeter Fläche der Vorsprünge, vorzugsweise zwischen 0,25 und 10 Gramm pro Quadratmillimeter, liegt.

35. Optischer Gegenstand (1), der eine ophthalmische Linse darstellt, wobei die Linse selbst enthält:
- eine Basislinse, die mindestens ein organisches oder mineralisches Substrat enthält,
- eine Schicht aus einem druckempfindlichen Klebstoffmaterial, die entlang einer Fläche der Basislinse eine im Wesentlichen gleichmäßige Dicke hat, und
- Abschnitte eines übertragbaren Materials, die ein übertragenes Muster (P) formen,
wobei das Muster auf die Fläche der Basislinse durch ein Verfahren nach einem der vorhergehenden Ansprüche durch Haften auf der Basislinse mittels der Klebstoffschicht übertragen wird.

## Claims

1. Method for transferring a micron-sized pattern onto a surface of an optical article (1) which comprises the following steps:
/a/ depositing a layer of at least one transferable material (14) onto a surface (S) of a stamp (11) having depressions (12) and protuberances (13) forming the microrelief, of micron-sized or submicron-sized definition, corresponding to the pattern (P) to be transferred;
/b/ depositing a layer of a pressure-sensitive adhesive (2) onto the surface of the substrate of the optical article;
/c/ bringing the surface (S) of the stamp which comprises the layer of transferable material (14) into contact with the layer of pressure-sensitive adhesive (2);
/d/ applying a pressure to the stamp; and
/e/ moving the stamp away from the surface of the optical article comprising the layer of pressure-sensitive adhesive.

2. Method according to Claim 1, according to which, during step /d/, the pressure applied to the stamp causes a selective transfer of the portions (3) of the layer of transferable material (14), located on the protuberances (13) of the surface of the stamp (11), onto the surface of the optical article.

3. Method according to either one of Claims 1 and 2, in which the micron-sized pattern comprises one or more basic patterns, each basic pattern having a size between 10 µm and 50 nm, advantageously between 5 µm and 100 nm, and very advantageously between 3 µm and 150 nm.

4. Method according to one of the preceding claims, according to which the transferred pattern (P) is a diffracting pattern when said pattern is lit by a light beam.

5. Method according to one of the preceding claims, according to which the transferred pattern (P) is a holographic pattern.

6. Method according to Claim 5, according to which the transferred pattern (P) is a holographic pattern of the amplitude hologram type.

7. Method according to Claim 5, according to which the transferred pattern is a holographic pattern of the digital hologram type formed from an assembly of contiguous pixels, each pixel having a surface area between 0.2 µm² and 25 µm², advantageously between 0.2 µm² and 4 µm².

8. Method according to one of the preceding claims, according to which the transferred pattern (P) occupies a reduced part of one side of the optical article (1).

9. Method according to Claim 8, according to which the transferred pattern (P) occupies a part of the side of the optical article (1) smaller than 25 mm².

10. Method according to one of Claims 1 to 7, according to which the transferred pattern (P) occupies one entire side of the optical article (1).

11. Method according to Claim 10, according to which the transferred pattern (P) comprises a grid of parallel, electrically conductive wires.

12. Method according to one of the preceding claims, according to which the optical article (1) is chosen from an optical instrumentation lens, a sight lens, a visor and an ophthalmic lens.

13. Method according to Claim 12, according to which the optical article (1) is an ophthalmic lens chosen from an afocal, unifocal, bifocal, trifocal and progressive or varifocal lens.

14. Method according to either of Claims 12 and 13 together with claims 6 to 9, according to which the holographic pattern (P) is adapted to form a reading image when a light beam (101) is sent through the lens (1) at the location of said pattern.

15. Method according to one of the preceding claims, according to which the layer of pressure-sensitive adhesive material (2) is deposited on the surface of the optical article (1) by a process of spin coating, spraying, or a jet of material from a printer.

16. Method according to one of Claims 1 to 14, according to which the layer of pressure-sensitive adhesive material (2) is initially borne by at least one protective sheet (20), then is applied to the surface of the optical article (1) through said sheet, and according to which said sheet is then peeled off so as to leave the layer of adhesive material on the surface of the optical article.

17. Method according to one of the preceding claims, according to which the thickness of the layer of pressure-sensitive adhesive material is between 0.5 µm and 300 µm, advantageously between 5 µm and 100 µm, and very preferably between 10 µm and 50 µm.

18. Method according to one of the preceding claims, additionally comprising the following step, which is carried out after step /a/ and/or step /e/:
/f/ covering the surface of the article with one or more functionalized coatings.

19. Method according to Claim 18, according to which the functionalized coating has a functionality of the impact resistance, abrasion resistance, antireflection, antisoiling, antifogging, antistatic, polarizing, colouring or photochromic type.

20. Method according to Claim 18, according to which the supplementary step /f/ is carried out after step /e/.

21. Method according to one of the preceding claims, according to which the transferable material is a metallic material.

22. Method according to Claim 21, according to which the transferable material is chosen from gold, aluminium, chromium, silver, copper, nickel, platinum, palladium and an alloy comprising at least one of these metals.

23. Method according to either one of Claims 21 and 22, according to which the layer of transferable material is deposited in step /a/ onto the surface (S) of the stamp by vacuum evaporation or by sputtering.

24. Method according to one of Claims 1 to 20, according to which the layer of transferable material (14) comprises a stack of several layers of respective materials.

25. Method according to Claim 24, according to which the material of at least one of the layers of the stack is refracting.

26. Method according to one of the preceding claims, according to which the stamp is based on polydimethylsiloxane at least at the location of the protuberances (13) of the surface (S) of the stamp.

27. Method according to one of the preceding claims, according to which the stamp has an approach parallel to the normal of the point of contact on the substrate of the optical article.

28. Method according to one of the preceding claims, according to which the surface (S) of the stamp is suitable for being deformed during the application against the surface of the optical article (1) in step /d/, as a function of a curvature of said surface of the article.

29. Method according to one of the preceding claims, additionally comprising a step for treating the surface of the optical article (1) carried out before step /b/.

30. Method according to one of the preceding claims, according to which the pressure-sensitive adhesive material is chosen from the family of polyacrylates, the family of styrene-based block copolymers, and mixtures based on natural rubber.

31. Method according to any one of the preceding claims, according to which the pressure-sensitive adhesive material comprises components that have an optical function chosen from colouring and photochromism.

32. Method according to one of the preceding claims, according to which the depressions (12) and the protuberances (13) have dimensions between 10 microns and 50 nanometers measured parallel to the membrane (11).

33. Method according to one of the preceding claims, according to which the depth of the depressions (12) is between 0.1 µm and 30 µm, advantageously between 0.1 µm and 10 µm.

34. Method according to one of the preceding claims, according to which the application pressure of the stamp to the optical article (1) is between 0.25 and 70 grams per square millimetre of surface area of the protuberances, preferably between 0.25 and 10 grams per square millimetre.

35. Optical article (1) representing an ophthalmic lens, said lens itself comprising:
- a base lens comprising at least one organic or mineral substrate;
- a layer of a pressure-sensitive adhesive material, which has a substantially uniform thickness along the surface of the base lens; and
- portions of a transferable material that form a transferred pattern (P),
the pattern being transferred to the surface of the base lens by a method according to any one of the preceding claims, by adhesion onto the base lens via the layer of adhesive material.
